# EUROPÄISCHE PATENTSCHRIFT

(11) **EP 2 690 330 B1**
(45) Veröffentlichungstag und Bekanntmachung des Hinweises auf die Patenterteilung: **03.03.2021**
(21) Anmeldenummer: 13002655.2
(22) Anmeldetag: 22.05.2013
(51) Int. Cl.: F16K 31/06, F16K 29/00

(54) **Verfahren und Vorrichtung zum Herstellen eines Ventils**
Method and device for manufacturing a valve
Procédé et dispositif de fabrication d'une vanne

(30) Priorität: 24.07.2012 DE 102012106682
(43) Veröffentlichungstag der Anmeldung: 29.01.2014
(73) Patentinhaber: dormakaba Deutschland GmbH, 58256 Ennepetal (DE)
(72) Erfinder: Bienek, Volker, D-44143 Dortmund (DE); Böse, Felix, D-58256 Ennepetal (DE)
(74) Vertreter: Balder IP Law, S.L.

(56) Entgegenhaltungen:
- DE-A1-102010 043 614
- US-A1- 2006 163 511
- US-A1- 2007 246 667

## Beschreibung

Die Erfindung betrifft ein Verfahren sowie eine Vorrichtung zum Herstellen eines Ventils mit einem Ventilsitz, gebildet aus einem Durchlass und einem den Durchlass verschließenden Ventilelement. Insbesondere zeigt die Erfindung ein neues Verfahren und eine neue Vorrichtung zum Einpassen und Kalibrieren der Ventilsitzbauteile bei einem gleichzeitigen Ausgleich von Fertigungsungenauigkeiten.

In Vorrichtungen nach dem Stand der Technik wird der Durchlass in einem Ventil mittels eines eigenen Anschlagdorns angeschlagen, um somit Fertigungstoleranzen auszugleichen. Hauptsächlich werden durch das Anschlagen Oberflächenfehler, Rauhigkeiten, Riefen und Grataufwerfungen geglättet. Dabei kommt in der Regel eine externe Vorrichtung mit einer Federschlagpresse und einem speziellen Anschlagdorn zum Einsatz. Dies hat den Nachteil, dass die Anschlagdorne in den Toleranzen und in der Form variieren und zudem einem undefinierbaren Verschleiß unterliegen. Damit ergeben sich Abweichungen zum späteren Funktionsbauteil, was Undichtigkeiten nach sich zieht. Des Weiteren werden durch Ausrichtungsdifferenzen und Änderungen der Krafteinstellwerte unterschiedlich Anschlagergebnisse erzielt.

Aus dem Stand der Technik, insbesondere der US 2006/163511 A1, ist außerdem ein Elektromagnetventil bekannt, das derart ansteuerbar ist, dass ein Ventilschließglied mit einer definierten Impulskraft auf dem Ventilsitz anschlägt.

Es ist Aufgabe vorliegender Erfindung, ein Verfahren sowie eine Vorrichtung zum Herstellen eines Ventils anzugeben, wobei bei möglichst geringen Herstellkosten ein besonders dichter und langlebiger Ventilsitz erzeugt werden soll

Das Verfahren nach Anspruch 1 bezieht sich auf ein Verfahren bei dem das wiederholte Anschlagen des Ventilelementes auf den Durchlass zum Einpassen und Kalibrieren des Ventilsitzes durch eine eigens aufgesetzte Anschlagmagnetspule angeregt wird, und die Vorrichtung nach Anspruch 8 zum Herstellen eines Ventils umfasst eine eine eigene Anschlagmagnetspule. In der Beschreibung wird auch die Möglichkeit beschrieben, dass die Ventilmagnetspule diese Funktion erfüllt. Hierbei handelt es sich um eine aus dem Stand der Technik bekannte Ausführungsform, die nicht Teil der beanspruchten Erfindung darstellt.

Die Aufgabe wird gelöst durch die Merkmale der beiden unabhängigen Ansprüche. Die abhängigen Ansprüche haben weitere vorteilhafte Ausgestaltungen der Erfindung zum Gegenstand.

So wird die Aufgabe gelöst durch ein Verfahren zum Herstellen eines Ventils, insbesondere für einen Türschließer oder Türantrieb, aber auch allgemein für Sitzventile, mit einem Ventilsitz, gebildet aus einem Durchlass und einem den Durchlass verschließendes Ventilelement, umfassend den folgenden Schritt: Wiederholtes Anschlagen des Ventilelementes auf den Durchlass zum Einpassen und Kalibrieren des Ventilsitzes, wobei das Ventilelement mittels einer bestromten Magnetspule zum wiederholten Anschlagen angeregt wird, und wobei das Ventilelement nach dem wiederholten Anschlagen im Ventil verbleibt und im regulären Betrieb des Ventils nutzbar ist. Bevorzugt erfolgt das Anschlagen mit einer im Vergleich zum regulären Betrieb des Ventils erhöhten Energie.

Erfindungsgemäß wird die Anschlagbewegung nicht mit einer externen Federschlagpresse erzeugt, sondern mittels einer Magnetspule. Die Magnetspule induziert die entsprechende Kraft dabei auf das Ventilelement oder es wird das Ventilelement noch mit einem Zwischenstück verbunden, in welches die Kraft von der Magnetspule induziert und auf das Ventilelement übertragen wird. Erfindungsgemäß wird der dichte Ventilsitz durch die späteren Funktionsteile, nämlich das Ventilelement und den Durchlass, selbst erzeugt. Dadurch werden automatisch die Toleranzen in den Bauteilen des Ventilsitzes beim Anschlagen des Ventilsitzes berücksichtigt und gleichzeitig sämtliche Fertigungsungenauigkeiten ausgeglichen. Mit dem erhöhten Energieniveau wird am Ventilsitz eine plastische Verformung erzeugt, die genau der Form und den Toleranzen des Ventilelements entspricht. Das Ventilelement, mit dem das Anschlagen durchgeführt wird, verbleibt anschließend im Ventil und eine Demontage der Ventilbaugruppe ist nicht mehr notwendig. Darüber hinaus erspart das erfindungsgemäße Verfahren eine Wartung der bisher verwendeten Anschlagdorne.

Insbesondere durch eine frequenzgesteuerte Spannungsbeaufschlagung der Magnetspule kann eine erhöhte Energie der Anschlagkraft bewirkt werden, wodurch die Einpassung der Bauteile zueinander sehr wirksam erfolgt. Das bisher bekannte Setzungsverhalten von Ventilsitzen im späteren Betrieb wird durch die Erfindung merklich reduziert. Eine spätere Neueinstellung der Magnetpole in einem Magnetventil ist dadurch kaum noch erforderlich. Folglich reduzieren sich kostenintensive Demontagen und Reparaturen von teuren Produkten.

Das erfindungsgemäße Verfahren sowie die später erläuterte erfindungsgemäße Vorrichtung finden bei allen Arten von Ventilen Anwendung. Insbesondere werden hydraulisch und/oder magnetisch wirkende Wegeventile oder Sitzventile genauso wie Sicherheitsventile hergestellt.

In bevorzugter Ausführung ist vorgesehen, dass die Magnetspule mittels eines Frequenzgenerators pulsierend bestromt wird. Insbesondere ist eine derartige Bestromung vorgesehen, so dass das Ventilelement mit einer Frequenz zwischen 1 und 10 Hz. auf dem Durchlass aufschlägt. Die bevorzugte Betriebsspannung für das pulsierende Bestromen der Magnetspule beträgt zwischen 10 V und 100 V, insbesondere zwischen 30 V und 70 V. Durch die entsprechende Frequenz wird ermöglicht, dass der Anker bzw. das Ventilelement immer wieder neu beschleunigt werden und kinetische Energie aufbauen. Dies führt zu einer besseren plastischen Verformung des Ventilsitzes.

In einer weiteren vorteilhaften Ausführung ist vorgesehen, dass das Ventilelement in Öffnungsrichtung federbelastet ist. Dadurch muss mittels der Magnetspule lediglich ein Beaufschlagen des Ventilelements in Schließrichtung erfolgen. Das Rückstellen erfolgt dann mittels der Feder.

Ferner ist bevorzugt vorgesehen, dass das Anschlagen im trockenen Zustand, insbesondere ohne Ölfüllung, des Ventils durchgeführt wird. Dadurch werden Dämpfungseffekte des Hydrauliköls ausgeschlossen und damit die Schlagenergie maximiert.

In einer weiteren vorteilhaften Ausbildung des Verfahrens ist vorgesehen, dass das herzustellende Ventil ein Magnetventil mit einer eigenen Ventilmagnetspule ist. Diese eigene Ventilmagnetspule dient im regulären Betrieb des Magnetventils zum Bewegen des Ventilelements und somit zum Öffnen und Schließen des Ventils. Bei der Herstellung dieses Ventils gibt es nun zwei Möglichkeiten zur Erzeugung des Anschlages. Zum einen kann die Ventilmagnetspule bereits im Herstellungsprozess verwendet werden, um das wiederholte Anschlagen des Ventilelements zu erzeugen. Alternativ dazu kann im Herstellungsprozess anstatt der Ventilmagnetspule eine stärkere Anschlagmagnetspule aufgesetzt werden. Sodann wird während des Herstellungsprozesses die Anschlagmagnetspule pulsierend bestromt. Insbesondere mit der eigenen Anschlagmagnetspule kann ein sehr starkes Anschlagen des Ventilelements auf den Durchlass erzeugt werden. Das Anschlagen erfolgt mit einer erhöhten Spannung (z.B. 50V) im Vergleich zum regulären Betrieb (z.B. 24V).

Bei Magnetventilen ist in der Regel das Ventilelement, z.B. ausgebildet als Kugel, bereits mit einem Stößel verbunden oder ist integral in einem Stößel ausgebildet. Dieser Stößel ragt dann im regulären Betrieb des Magnetventils in die Ventilmagnetspule hinein. Bei Verwendung einer eigenen Anschlagmagnetspule im Herstellungsprozess ragt dieser Stößel in die Anschlagmagnetspule hinein. Im Rahmen der Erfindung ist nun bevorzugt vorgesehen, dass dieser Stößel auch während des Herstellungsprozesses zum Anschlagen des Ventilelements genutzt wird. So wird ein und derselbe Stößel sowohl während der Herstellung zum Anschlagen benutzt als auch später im regulären Betrieb zum Öffnen und Schließen des Ventils.

Des Weiteren ist bevorzugt vorgesehen, dass der Ventilsitz im Anschluss an das wiederholte Anschlagen auf seine Dichtheit geprüft wird, wobei während der Prüfung auf Dichtheit zum Schließen des Ventilelements dieselbe Magnetspule wie für das Anschlagen benutzt wird. Insbesondere, wenn zum Anschlagen eine eigene Anschlagmagnetspule aufgesetzt wird, so wird diese direkt im Anschluss an das Anschlagen auch zur Simulation der reellen Betriebsbedingungen verwendet. In der Regel wird die Spule dann nach dem Anschlagen mit einer geringeren Betriebsspannung betrieben und keine pulsierende, sondern eine dauerhafte Kraft in den Stößel bzw. das Ventilelement induziert. Dadurch wird der Ventilsitz geschlossen gehalten und es kann eine Überprüfung der Dichtheit des Ventils erfolgen.

Zur Überprüfung der Dichtheit ist insbesondere ein Hydraulikaggregat vorgesehen, dass das Ventil mit druckbeaufschlagtem Öl versorgt.

Des Weiteren ist eine erfindungsgemäße Vorrichtung zum Herstellen des Ventils vorgesehen. Somit wird die Aufgabe auch gelöst durch eine Vorrichtung zum Herstellen eines Ventils mit einem Ventilsitz, gebildet aus einem Durchlass und einem den Durchlass verschließenden Ventilelement, umfassend eine zum Anregen eines Anschlagens des Ventilelementes auf den Durchlass ausgebildete Magnetspule, ein Steuergerät zum Bestromen der Magnetspule, und eine Umschaltvorrichtung zum Schalten zwischen einer ersten Betriebsart und einer zweiten Betriebart des Steuergeräts, wobei das Steuergerät in der ersten Betriebsart als Frequenzgenerator zum pulsierenden Bestromen der Magnetspule ausgebildet ist, sodass mittels wiederholtem Anschlagen des Ventilelementes auf den Durchlass ein Einpassen und Kalibrieren des Ventilsitzes durchführbar ist, und wobei das Steuergerät in der zweiten Betriebsart dazu ausgebildet ist, um das Ventilelement mittels der Magnetspule zur Simulation reeller Betriebsbedingungen zu bewegen.

Die im Rahmen des erfindungsgemäßen Verfahrens vorgestellten bevorzugten Ausgestaltungen finden entsprechend bevorzugte Anwendung auf die erfindungsgemäße Vorrichtung.

Insbesondere ist vorgesehen, dass das Steuergerät dazu ausgebildet ist, um in der zweiten Betriebsart weniger Kraft auf das Ventilelement wirken zu lassen, als in der ersten Betriebsart. Darüber hinaus ist vorgesehen, dass das Steuergerät in der zweiten Betriebsart die Magnetspule derart bestromt, dass das Ventilelement dauerhaft in Schließrichtung beaufschlagt wird, um eine Dichtheitsprüfung des Ventils durchzuführen.

Im Folgenden wird die Erfindung anhand der begleitenden Zeichnung genauer erläutert. Dabei zeigt:
- Fig. 1: ein Ventil, hergestellt nach dem erfindungsgemäßen Verfahren gemäß einem Ausführungsbeispiel,
- Fig. 2: eine Detailansicht aus Fig. 1, und
- Fig. 3: ein Steuergerät zur Durchführung des erfindungsgemäßen Verfahrens gemäß dem Ausführungsbeispiel.

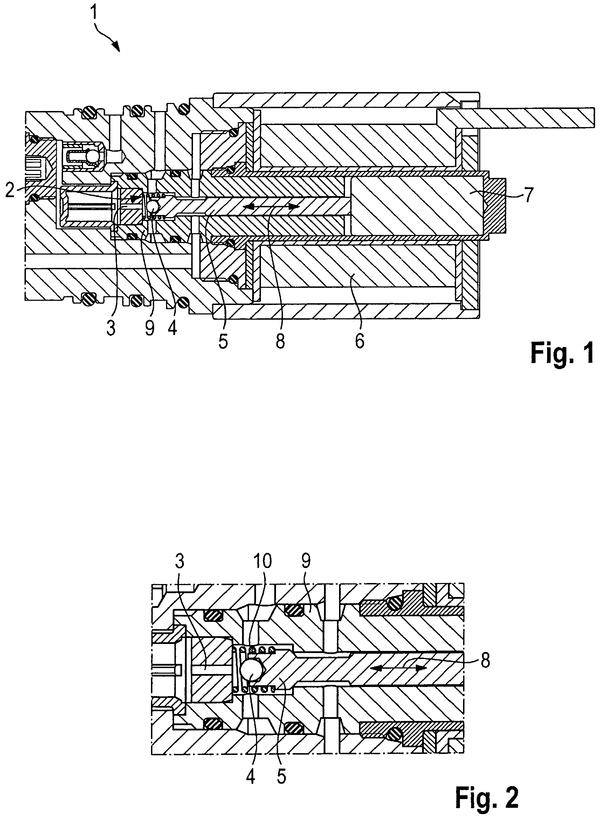

Im Folgenden wird anhand der Fig. 1 bis 3 ein Ausführungsbeispiel der Erfindung genauer erläutert.

Fig. 1 zeigt ein Ventil 1, hergestellt nach dem erfindungsgemäßen Verfahren, wobei das Ventil 1 gleichzeitig auch die Vorrichtung zur Durchführung des erfindungsgemäßen Verfahrens darstellt. Die Fig. 2 zeigt eine Detailansicht aus Fig. 1.

Fig. 1 und 2 zeigen das Ventil 1, umfassend eine Ventilpatrone 9, eine Magnetspule 6 und einen Magnetanker 7.

Die Ventilpatrone 9 umfasst im Wesentlichen ein Gehäuse, in das ein Durchlass 3 eingearbeitet ist. Des Weiteren ist in der Ventilpatrone 9 ein Stößel 5 mit einem im Stößel 5 aufgenommenem Ventilelement 4 montiert. Das Ventilelement 4 ist als Kugel ausgebildet. Im geschlossenen Zustand des Ventils 1 sitzt das Ventilelement 4 auf dem Durchlass 3. Die sich dabei berührenden Flächen des Ventilelements 4 und des Durchlasses 3 bilden den Ventilsitz 2 des Ventils 1. Des Weiteren umfasst die Ventilpatrone 9 eine Druckfeder 10. Die Druckfeder 10 ist zwischen dem Gehäuse der Ventilpatrone 9 und dem Stößel 5 angeordnet. Das Schließen des Ventils 1 erfolgt gegen die Kraft der Druckfeder 10, so dass die Druckfeder 10 ein Öffnen bzw. den Rückhub des Ventils 1 unterstützt.

Der Stößel 5 erstreckt sich bis in die Magnetspule 6 hinein. Im Anschluss an den Stößel 5 befindet sich in der Magnetspule 6 noch der Magnetanker 7.

Vor Inbetriebnahme des Ventils 1 ist es notwendig, dass der Ventilsitz 2 eingepasst und kalibriert wird. Dabei müssen insbesondere Fertigungsungenauigkeiten des Durchlasses 3 und des Ventilelements 4 ausgeglichen werden. Hierzu wird der Stößel 5 durch die Magnetspule 6 wiederholt gemäß der eingezeichneten Anschlagbewegung 8 bewegt. Dabei schlägt das Ventilelement 4 mehrmals auf den Durchlass 3 auf, wodurch ein Einpassen und Kalibrieren des Ventilsitzes 2 erzeugt wird.

Es wird eine eigene Anschlagmagnetspule aufgesetzt.

Dies ermöglicht insbesondere ein stärkeres Betätigen des Ventilelements 4 und somit ein noch effektiveres Anschlagen des Ventilsitzes 2.

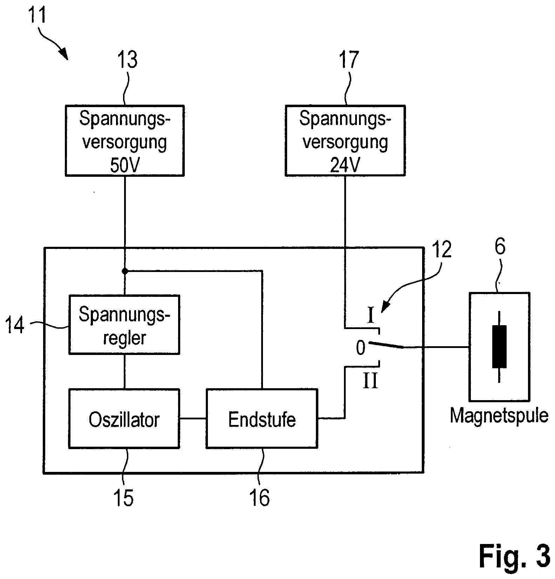

Fig. 3 zeigt ein Steuergerät 11, wie es bei dem erfindungsgemäßen Verfahren bzw. der erfindungsgemäßen Vorrichtung zum Einsatz kommt. Das Steuergerät 11 wird zum Bestromen der Magnetspule 6 verwendet. Dabei kann es sich um die Ventilmagnetspule oder um eine eigene Anschlagmagnetspule handeln. Das Steuergerät 11 umfasst eine Umschaltvorrichtung 12. Mit dieser Umschaltvorrichtung 12 ist ein Schalten zwischen einer ersten Betriebsart und einer zweiten Betriebsart der Steuervorrichtung 11 möglich. Die erste Betriebsart wird ermöglicht durch eine Spannungsversorgung 13 mit 50 V, einem Spannungsregler 14, einem Oszillator 15 und einer Endstufe 16. Diese erste Betriebsart erzeugt an der Magnetspule 6 eine pulsierende Spannung. Dadurch wird der Stößel 5 und folglich auch das Ventilelement 4 zu einer pulsierenden Bewegung bzw. zu einem pulsierenden Anschlagen gegen den Durchlass 3 angeregt. Um direkt im Anschluss an das Anschlagen eine Überprüfung der Betriebsfunktion des Ventils 1 durchzuführen, kann mittels der Umschaltvorrichtung 12 auf die zweite Betriebsart umgeschaltet werden. In der zweiten Betriebsart wird die Magnetspule 6 mit einer Spannung von 24 V dauerhaft versorgt. Dadurch wird der Stößel 5 und somit das Ventilelement 4 in Schließrichtung belastet und der Ventilsitz 2 geschlossen. Nun kann das Ventil 1 auf seine Dichtheit überprüft werden.

Ein großer Vorteil des erfindungsgemäßen Verfahrens bzw. der erfindungsgemäßen Vorrichtung besteht darin, dass die angeschlagene Ventilpatrone 9 nicht mehr demontiert werden muss, wodurch keine Veränderung der Arbeitsbedingungen bzw. der Funktionsteile im späteren Einsatz mehr auftreten können.

Allgemein kann das erfindungsgemäße Verfahren sowie die erfindungsgemäße Vorrichtung bei allen Ventilen eingesetzt werden. Insbesondere kommt die Erfindung bei hydraulisch oder magnetisch wirkenden Wegeventilen bzw. bei Sitzventilen zum Einsatz. Genauso kann die Erfindung jedoch auch für Sicherheitsventile, beispielsweise für Rückschlagventile, verwendet werden. Bei Rückschlagventilen ist beispielsweise kein eigener Stößel 5 im Ventil vorgesehen. In diesem Fall wird man im Herstellungsprozess an das Ventilelement eine Art Stößel oder Zwischenbauteil anbringen, welches dann in die Magnetspule hineinragt. Über diesen separat angebrachten Stößel bzw. über dieses Zwischenbauteil kann eine Anschlagkraft bzw. Anschlagbewegung auf das Ventilelement übertragen werden und somit ein Anschlagen des Ventilsitzes erreicht werden. Anschließend wird der separate Stößel bzw. das Zwischenbauteil wieder entfernt. Der entscheidende erfindungsgemäße Vorteil, nämlich das Anschlagen des Ventilsitzes mit demselben Bauteil (Ventilelement), mit dem auch im späteren Betrieb des Ventils der Ventilsitz geöffnet und geschlossen wird, bleibt auch hier erhalten.

### Bezugszeichenliste

- 1: Ventil
- 2: Ventilsitz
- 3: Durchlass
- 4: Ventilelement
- 5: Stößel
- 6: Magnetspule (Ventilmagnetspule bzw. Anschlagmagnetspule)
- 7: Magnetanker
- 8: Anschlagbewegung bzw. Schließ-/Öffnungsbewegung
- 9: Ventilpatrone
- 10: Feder
- 11: Steuergerät
- 12: Umschaltvorrichtung
- 13: Spannungsversorgung 50 V
- 14: Spannungsregler
- 15: Oszillator
- 16: Endstufe
- 17: Spannungsversorgung 24 V

## Patentansprüche

1. Verfahren zum Herstellen eines Ventils (1) mit einem Ventilsitz (2) gebildet aus einem Durchlass (3) und einem den Durchlass (3) verschließenden Ventilelement (4), umfassend den folgenden Schritt:
- wiederholtes Anschlagen des Ventilelementes (4) auf den Durchlass (3) zum Einpassen und Kalibrieren des Ventilsitzes (2),
wobei das Ventilelement (4) mittels einer bestromten Magnetspule (6) zum wiederholten Anschlagen angeregt wird, und wobei das Ventilelement (4) nach dem wiederholten Anschlagen im Ventil (1) verbleibt und im regulären Betrieb des Ventils (1) nutzbar ist, **dadurch gekennzeichnet, dass** das herzustellende Ventil (1) ein Magnetventil mit einer Ventilmagnetspule (6) zum Öffnen und Schließen des Ventilelementes (4) im regulären Betrieb ist, und wobei das wiederholte Anschlagen des Ventilelementes (4) auf den Durchlass (3) zum Einpassen und Kalibrieren des Ventilsitzes durch eine eigens aufgesetzte Anschlagmagnetspule (6) angeregt wird.

2. Verfahren nach Anspruch 1, **dadurch gekennzeichnet, dass** die Magnetspule (6) mittels eines Frequenzgenerators (13, 14, 15, 16) pulsierend bestromt wird.

3. Verfahren nach einem der vorhergehenden Ansprüche, **dadurch gekennzeichnet, dass** das Anschlagen mit einer im Vergleich zum regulären Betrieb des Ventils erhöhten Energie erfolgt.

4. Verfahren nach einem der vorhergehenden Ansprüche, **dadurch gekennzeichnet, dass** das Ventilelement (4) in Öffnungsrichtung federbelastet ist.

5. Verfahren nach einem der vorhergehenden Ansprüche, **dadurch gekennzeichnet, dass** das Anschlagen im trockenen Zustand, insbesondere ohne Ölfüllung, des Ventils (1) durchgeführt wird.

6. Verfahren nach Anspruch 1, **dadurch gekennzeichnet, dass** das Ventilelement (4) mit einem Stößel (5) verbunden ist oder integral in einem Stößel (5) ausgebildet ist, wobei der Stößel (5) in die Ventilmagnetspule (6) und/oder Anschlagmagnetspule (6) hineinragt, und wobei der Stößel (5) nach dem wiederholten Anschlagen im Ventil (1) verbleibt und im regulären Betrieb des Ventils (1) nutzbar ist.

7. Verfahren nach einem der vorhergehenden Ansprüche, **dadurch gekennzeichnet, dass** der Ventilsitz (2) im Anschluss an das wiederholte Anschlagen auf seine Dichtheit geprüft wird, wobei während der Prüfung auf Dichtheit zum Schließen des Ventilelementes (4) dieselbe Magnetspule (6) wie für das Anschlagen benutzt wird.

8. Vorrichtung zum Herstellen eines Ventils (1) mit einem Ventilsitz (2) gebildet aus einem Durchlass (3) und einem den Durchlass (3) verschließenden Ventilelement (4), umfassend:
- eine zum Anregen eines Anschlagens des Ventilelementes (4) auf den Durchlass (3) ausgebildete Magnetspule (6), wobei es sich um eine eigene Anschlagmagnetspule (6) handelt,
- ein Steuergerät (11) zum Bestromen der Magnetspule (6), und
- eine Umschaltvorrichtung (12) zum Schalten zwischen einer ersten Betriebsart und einer zweiten Betriebart des Steuergeräts (11),
wobei das Steuergerät (11) in der ersten Betriebsart als Frequenzgenerator (13, 14, 15, 16) zum pulsierenden Bestromen der Magnetspule (6) ausgebildet ist, sodass mittels wiederholtem Anschlagen des Ventilelementes (4) auf den Durchlass (3) ein Einpassen und Kalibrieren des Ventilsitzes (2) durchführbar ist, und wobei das Steuergerät (11) in der zweiten Betriebsart dazu ausgebildet ist, um das Ventilelement (4) mittels der Magnetspule (6) zur Simulation reeller Betriebsbedingungen zu bewegen.

9. Vorrichtung nach Anspruch 8, **dadurch gekennzeichnet, dass** das Steuergerät (11) dazu ausgebildet ist, um in der zweiten Betriebsart weniger Kraft auf das Ventilelement (4) wirken zu lassen als in der ersten Betriebsart.

10. Vorrichtung nach einem der Ansprüche 8 oder 9, **dadurch gekennzeichnet, dass** das Steuergerät (11) in der zweiten Betriebsart die Magnetspule (6) derart bestromt, dass das Ventilelement (4) dauerhaft in Schließrichtung beaufschlagt wird, um eine Dichtheitsprüfung des Ventils (1) durchzuführen.

## Claims

1. A method for producing a valve (1) with a valve seat (2), formed from a passage (3) and a valve element (4) closing the passage (3), comprising the following step:
- the valve element (4) repeatedly impacting on the passage (3) for fitting and calibrating the valve seat (2),
wherein an energized magnetic coil (6) excites the valve element (3) for repeated impacting, and wherein, following repeated impacting, the valve element (4) remains in the valve (1) and is usable in regular operation of the valve (1), **characterized in that** the valve (1) to be produced is a magnetic valve with a magnetic valve coil (6) for opening and closing the valve element (4) in regular operation, and wherein a proper placed impact magnetic coil (6) excites the valve element (4) for repeated impact on the passage (3) for fitting and calibrating the valve seat.

2. The method according to claim 1, **characterized in that** a frequency generator (13, 14, 15, 16) in a pulsed manner energizes the magnetic coil (6).

3. The method according to any of the preceding claims, **characterized in that** impacting is realized at a higher energy than compared to the regular operation of the valve.

4. The method according to any of the preceding claims, **characterized in that** the valve element (4) is springloaded in opening direction.

5. The method according to any of the preceding claims, **characterized in that** impacting is performed in a dry condition, in particular without oil filling, of the valve (1).

6. The method according to claim 1, **characterized in that** the valve element (4) is connected to a tappet (5) or is integrally formed with a tappet (5), wherein the tappet (5) protrudes into the magnetic valve coil (6) and/or the magnetic impact coil (6), and wherein, following repeated impacting, the tappet (5) remains in the valve (1) and is usable in regular operation of the valve (1).

7. The method according to any of the preceding claims, **characterized in that**, following repeated impacting, the valve seat (2) is tested for tightness, wherein, during the test for tightness, the same magnetic coil (6) is used for closing the valve element (4) as for impacting.

8. A device for producing a valve (1) with a valve seat (2), formed from a passage (3) and a valve element (4) closing the passage (3), comprising:
- a magnetic coil (6) formed for exciting the valve element (4) to impact on the passage (3), wherein it is question of a proper magnetic impact coil (6),
- a control device (11) for energizing the magnetic coil (6), and
- a switching device (12) for switching between a first mode of operation and a second mode of operation of the control device (11),
wherein, in the first mode of operation, the control device (11) is formed as a frequency generator (13, 14, 15, 16) for pulsed energizing the magnetic coil (6), such that repeated impacting of the valve element (4) on the passage (3) can be performed for fitting and calibrating the valve seat (2), and wherein, in the second mode of operation, the control device (11) is formed for moving the valve element (4) by means of the magnetic coil (6) for simulating real operating conditions.

9. The device according to claim 8, **characterized in that** the control device (11) is formed for exerting less force on the valve element (4) in the second mode of operation than in the first mode of operation.

10. The device according to any of the claims 8 or 9, **characterized in that**, in the second mode of operation, the control device (11) energizes the magnetic coil (6) such that the valve element (4) is permanently charged in closing direction, in order to perform a tightness test of the valve (1).

## Revendications

1. Méthode pour produire une soupape (1) avec un siège de soupape (2) aménagé par un passage (3) et un élément de soupape (4) fermant le passage (3), comportant l'étape suivante :
- l'élément de soupape (4) frappant de façon répétée sur le passage (3) pour emboîter et calibrer le siège de soupape (2),
une bobine d'électro-aimant (6) mise sous tension excitant l'élément de soupape (4) à frapper de façon répétée, et, suivant les frappes répétées, l'élément de soupape (4) restant dans la soupape (1) et est utilisable dans l'opération régulière de la soupape (1), **caractérisée en ce que** la soupape (1) à produire est une soupape magnétique avec une bobine d'électroaimant de soupape (6) pour ouvrir et fermer l'élément de soupape (4) dans l'opération régulière, et une propre bobine d'électro-aimant de frappe (6) posée excitant l'élément de soupape (4) à frapper de façon répétée sur le passage (3) pour emboîter et calibrer le siège de soupape.

2. Méthode selon la revendication 1, **caractérisée en ce qu'**un générateur de fréquence (13, 14, 15, 16) met sous tension de façon pulsée la bobine d'électroaimant (6).

3. Méthode selon l'une des revendications précédentes, **caractérisée en ce que** la frappe se fait avec une énergie plus élevée comparé à l'opération régulière de la soupape.

4. Méthode selon l'une des revendications précédentes, **caractérisée en ce que** l'élément de soupape (4) est chargé par ressort en direction d'ouverture.

5. Méthode selon l'une des revendications précédentes, **caractérisée en ce que** la frappe est exécutée en condition sèche de la soupape (1), tout particulièrement sans remplissage d'huile.

6. Méthode selon la revendication 1, **caractérisée en ce que** l'élément de soupape (4) est lié à un poussoir (5) ou est aménagé intégralement avec un poussoir (5), le poussoir (5) faisant saillie dans la bobine d'électro-aimant de soupape (6) et/ou dans la bobine d'électro-aimant de frappe (6), et, suivant les frappes répétées, le poussoir (6) reste dans la soupape (1) et est utilisable en opération régulière de la soupape (1).

7. Méthode selon l'une des revendications précédentes, **caractérisée en ce que**, suivant les frappes répétées, le siège de soupape (2) est testé à l'étanchéité, pendant le test à l'étanchéité, la même bobine d'électro-aimant (6) est utilisée pour fermer l'élément de soupape (4) que pour frapper.

8. Dispositif pour produire une soupape (1) avec un siège de soupape (2) aménagé par un passage (3) et un élément de soupape (4) fermant le passage (3), comportant :
- une bobine d'électro-aimant (6) aménagée à exciter l'élément de soupape (4) pour frapper sur le passage (3), s'agissant d'une propre bobine d'électro-aimant de frappe (6),
- un appareil de commande (11) pour mettre la bobine d'électro-aimant (6) sous tension, et
- un dispositif de commutation (12) pour commuter entre un premier mode d'opération et un deuxième mode d'opération de l'appareil de commande (11),
dans le premier mode d'opération, l'appareil de commande (11) étant aménagé comme générateur de fréquence (13, 14, 15, 16) pour mettre sous tension pulsée la bobine d'électro-aimant (6) de sorte que les frappes répétées de l'élément de soupape (4) sur le passage (3) permettant de performer l'emboîtage et le calibrage du siège de soupape (2), et, dans le deuxième mode d'opération, l'appareil de commande (11) étant aménagé à mouvoir l'élément de soupape (4) au moyen de la bobine d'électroaimant (6) pour simuler des conditions d'opération réelles.

9. Dispositif selon la revendication 8, **caractérisé en ce que** l'appareil de commande (11) est aménagé à faire appliquer moins de force sur l'élément de soupape (4) dans le deuxième mode d'opération que dans le premier mode d'opération.

10. Dispositif selon l'une des revendications 8 ou 9, **caractérisé en ce que**, dans le deuxième mode d'opération, l'appareil de commande (11) met sous tension la bobine d'électro-aimant (6) de telle façon que l'élément de soupape (4) est chargé en permanence in direction de fermeture pour effectuer un test d'étanchéité de la soupape (1).
